# EUROPÄISCHE PATENTSCHRIFT

(11) **EP 1 513 891 B1**
(45) Veröffentlichungstag und Bekanntmachung des Hinweises auf die Patenterteilung: **21.03.2012**
(21) Anmeldenummer: 03735443.8
(22) Anmeldetag: 23.05.2003
(51) Int. Cl.: C08K 3/36, C08L 11/02, C09J 11/02

(54) **WÄSSRIGE KLEBSTOFF-DISPERSIONEN**
AQUEOUS ADHESIVE DISPERSIONS
DISPERSIONS AQUEUSES D'ADHESIF

(30) Priorität: 04.06.2002 DE 10224898
(43) Veröffentlichungstag der Anmeldung: 16.03.2005
(73) Patentinhaber: Bayer MaterialScience AG, 51368 Leverkusen (DE)
(72) Erfinder: MUSCH, Rüdiger, 51467 Bergisch Gladbach (DE); PANSKUS, Knut, 51375 Leverkusen (DE); PANTKE, Dietrich, 40882 Ratingen (DE)
(86) Internationale Anmeldenummer: PCT/EP2003/005396
(87) Internationale Veröffentlichungsnummer: WO 2003/102066

(56) Entgegenhaltungen:
- DATABASE WPI Section Ch, Week 199441 Derwent Publications Ltd., London, GB; Class A12, AN 1994-330352 XP002259646 & JP 06 256738 A (DENKI KAGAKU KOGYO KK), 13. September 1994 (1994-09-13)

## Beschreibung

Die Erfindung betrifft wässrige Polymer-Dispersionen auf Basis von Polychloropren, ein Verfahren zu deren Herstellung und Verwendung.

Kontaktklebstoffe auf Basis von Polychloropren sind überwiegend lösemittelhaltige Klebstoffe, die auf beide zu verbindendenen Substrate aufgebracht und getrocknet werden. Durch anschließendes Fügen beider Substrate unter Druck erhält man einen Verbindungsaufbau mit hoher Angangsfestigkeit unmittelbar nach dem Fügevorgang. Die anschließende Vernetzung führt zur endgültigen Aushärtung.

Aus ökologischen Gründen besteht ein wachsender Bedarf an geeigneten wässrigen Klebstoff-Dispersionen, die sich zu entsprechenden wässrigen Klebstoffformulierungen verarbeiten lassen. Nachteil dieses Systems ist, dass nach dem Verdampfen des Wassers die Anfangsfestigkeit unmittelbar nach dem Fügevorgang, im Vergleich zu lösemittelhaltigen Klebstoffen, deutlich niedriger ist. Eine ausreichende Kontaktierung der zu verklebenden Substrate lässt sich daher nur durch vorherige Thermoaktivierung des trockenen Klebstoff-Films erreichen. Daneben besteht die Möglichkeit durch einen Auftrag des Klebstoffs im "Spray-mix"-Verfahren sofort eine ausreichende Nassfestigkeit zu erreichen. Bei diesem Verfahren wird der Klebstoff sowie ein Koagulationsmittel separat in einer Sprühpistole gefördert, im Sprühstrahl gemischt und koaguliert. Dieser Vorgang ist zeit- und kostenintensiv und aus ökonomischer Sicht unbefriedigend. Eine Übersicht dieser Methoden wird z.B. in "Handbook of Adhesives", Irving Skeist, Chapman, Hall, New York, 3. Ed. 1990, Part 15, page 301, R. Musch et al, Adhesives age, January 2001, page 17, "Spray-Mixing Klebstoffe auf Basis Dispercoll^{®}C für die Schaumstoff-Klebung", Technische Information der Bayer AG, Nr. KA-KR-0001d/01/05.96 gegeben.

Aus dem Stand der Techik ist der Einsatz von Kieselsäure-Produkte für unterschiedliche Anwendungen bekannt. Während feste SiO₂-Produkte vielfach zur Steuerung rheologischer Eigenschaften, als Füllstoffe oder Adsorbentien eingesetzt werden, dominiert bei Kieselsolen die Anwendung als Bindemittel diverser anorganischer Materialien, als Poliermittel von Halbleitern oder als Flockungspartner in kolloidchemischen Reaktionen. Beispielsweise wird in der EP-A 0 332 928 der Einsatz von Polychloropren-Latices in Gegenwart von Kieselsolen als Imprägnierschicht bei der Herstellung von Brandschutzelementen offenbart. In der FR-2 341 537 oder FR-2 210 699 werden pyrogene Kieselsäuren in Kombination mit Polychloroprenlatices zur Herstellung flammfester Schaumzurichtungen oder zur Bitumenvergütung und in der JP-A 06256738 in Kombination mit Chloropren-Acrylsäure-Copolymeren beschrieben.

Aufgabe der vorliegenden Erfindung bestand in der Bereitstellung einer wässrigen Klebstoffzusammensetzung, die nach der Applikation auf den zu verklebenden Substraten und dem Fügen eine hohe Anfangsfestigkeit, besonders im feuchten Zustand (Naßfestigkeit), aufweist.

Es wurde gefunden, dass durch eine Kombination von Polychloropren-Dispersionen und wässrigen Siliciumdioxid-Dispersionen Klebstoffe hergestellt werden können, die nach dem Verkleben eine hohe Anfangsfestigkeit, Naßfestigkeit und Wärmestandfestigkeit zeigen.

Gegenstand der vorliegenden Erfindung ist eine wässrige Polymer-Dispersion enthaltend
a) eine Polychloropren-Dispersion mit einer mittleren Teilchengröße von 60 bis 220 nm, bevorzugt 70 bis 160 nm sowie
b) eine wässrige Siliciumdioxid-Dispersion mit einem Partikeldurchmesser der SiO₂-Partikel von 1 bis 400 nm, bevorzugt 5 bis 100 nm, besonders bevorzugt 8 bis 50 nm.

Erfindungsgemäß geeignete Polychloropren-Dispersionen werden durch Emulsionspolymerisation von Chloropren und eines mit Chloropren copolymerisierbaren ethylenisch ungesättigten Monomeren in alkalischem Medium hergestellt, wie z.B. offenbart in der WO-A 02/24825 (.S. 3, Z. 26- S. 7, Z. 4), DE-A 30 02 734 (S. 8, Z. 23-S. 12, Z. 9) oder US-A 5,773,544 (Sp. 2, Z. 9 bis Sp. 4, Z. 45). Besonders bevorzugt sind Polychloropren Dispersionen, die durch kontinuierliche Polymerisation hergestellt werden, wie z.B beschrieben in der WO-A 02/24825, Beispiel 2 und DE 3 002 734 Beispiel 6, wobei der Reglergehalt zwischen 0,01 % und 0,3 % variiert werden kann.

Wässrige Dispersionen von Siliciumdioxid sind seit langem bekannt. Je nach Herstellprozeß liegen sie in unterschiedlicher Struktur vor.

Erfindungsgemäß geeignete Siliciumdioxid-Dispersionen können auf Basis von Kieselsol, Kieselgel, pyrogene Kieselsäuren oder Fällungskieselsäuren oder Mischungen der genannten, erhalten werden.

Kieselsäuresole sind kolloidale Lösungen von amorphem Siliciumdioxid in Wasser, die auch als Siliciumdioxidsole meist aber kurz als Kieselsole bezeichnet werden. Das Siliciumdioxid liegt dabei in Form von kugelförmigen und an der Oberfläche hydroxilierten Partikeln vor. Der Partikeldurchmesser der Kolloidteilchen beträgt in der Regel 1 bis 200 nm, wobei die zur Teilchengröße korrelierende spezifische BET-Oberfläche (bestimmt nach der Methode von G.N.Sears, Analytical Chemistry Vol. 28, N. 12, 1981-1983, Dezember 1956) bei 15 bis 2000 m²/g liegt. Die Oberfläche der SiO₂-Teilchen weist eine Ladung auf, die durch ein entsprechendes Gegenion ausgeglichen wird, das zur Stabilisierung der kolloidalen Lösung führt. Die alkalisch stabilisierten Kieselsole besitzen einen pH-Wert von 7 bis 11,5 und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Kieselsole können auch als semistabile kolloidale Lösungen schwach sauer vorliegen. Ferner ist es möglich, durch Beschichtung der Oberfläche mit Al₂(OH)₅Cl kationisch eingestellte Kieselsole herzustellen. Die Feststoff-Konzentrationen der Kieselsole liegen bei 5 bis 60 Gew.-% SiO₂.

Der Herstellprozess für Kieselsole durchläuft im wesentlichen die Produktionsschritte Entalkalisierung von Wasserglas mittels Ionenaustausch, Einstellung und Stabilisierung der jeweils gewünschten Teilchengrößen(verteilung) der SiO₂-Partikel, Einstellung der jeweils gewünschten SiO₂-Konzentration und gegebenenfalls einer Oberflächenmodifikation der SiO₂-Partikel, wie beispielsweise mit Al₂(OH)₅Cl. In keinem dieser Schritte verlassen die SiO₂-Partikel den kolloidal gelösten Zustand. Dadurch erklärt sich das Vorliegen der diskreten Primärpartikel mit beispielsweise hoher Bindereffektivität.

Unter Kieselgele versteht man kolloidal geformte oder ungeformte Kieselsäure von elastischer bis fester Konsistenz mit lockerer bis dichter Porenstruktur. Die Kieselsäure liegt in Form von hochkondensierter Polykieselsäure vor. Auf der Oberfläche befinden sich Siloxan und/oder Silanol-Gruppen. Die Herstellung der Kieselgele erfolgt aus Wasserglas durch Umsetzung mit Mineralsäuren. Die Primärpartikelgröße beträgt im Allgemeinen 3 bis 20 nm und die spezifische Oberfläche 250 bis 1000 m²/g (nach DIN 66131).

Des Weitem wird zwischen pyrogener Kieselsäure und Fällungskieselsäure unterschieden. Beim Fällungsverfahren wird Wasser vorgelegt und anschließend Wasserglas und Säure, wie H₂SO₄, simultan zugegeben. Dabei enstehen kolloidale Primärteilchen, die mit fortschreitender Reaktion agglomerieren und zu Agglomeraten verwachsen. Die spezifische Oberfläche liegt bei 30 bis 800 m²/g (DIN 66131) und die Primärpartikelgröße bei 5 bis 100 nm. Die Primärpartikel von diesen als Feststoff vorliegenden Kieselsäuren sind zu Sekundäragglomeraten fest vernetzt.

Pyrogene Kieselsäure kann durch Flammenhydrolyse oder mit Hilfe des Lichtbogenverfahrens hergestellt werden. Das dominierende Syntheseverfahren für pyrogene Kieselsäuren ist die Flammenhydrolyse, bei der Tetrachlorsilan in einer Knallgasflamme zersetzt wird. Die dabei gebildete Kieselsäure ist röntgenamorph. Pyrogene Kieselsäuren besitzen an ihrer nahezu porenfreien Oberfläche deutlich weniger OH-Gruppen als Fällungskieselsäure. Die über Flammhydrolyse hergestellte pyrogenen Kieselsäure hat eine spezifischen Oberfläche von 50 bis 600 m²/g (DIN 66131) und eine Primärpartikelgröße von 5 bis 50 nm, die über das Lichtbogenverfahren hergestellte Kieselsäure hat eine spezifischen Oberfläche von 25 bis 300 m²/g (DIN 66131) und eine Primärpartikelgröße von 5 bis 500 nm.

Weitere Angaben zu Synthese und Eigenschaften von Kieselsäuren in fester Form sind beispielsweise K. H. Büchel, H.-H. Moretto, P. Woditsch "Industrielle Anorganische Chemie", Wiley VCH Verlag 1999, Kap. 5.8 zu entnehmen.

Werden für die erfindungsgemäße Polymer-Dispersion ein als isolierter Feststoff vorliegender SiO₂-Rohstoff, wie beispielsweise pyrogene oder gefällte Kieselsäure, eingesetzt, so wird dieser in eine wässrige SiO₂-Dispersion durch Dispergieren überführt.

Zur Herstellung der Siliciumdioxid-Dispersionen werden Dispergatoren des Standes der Technik eingesetzt, bevorzugt solche, die zur Erzeugung hoher Scherraten geeignet sind, wie z.B. Ultratorrax oder Dissolverscheiben.

Bevorzugt werden solche wässrigen Siliciumdioxid-Dispersionen eingesetzt, deren SiO₂-Partikel eine Primärpartikelgröße von 1 bis 400 nm, bevorzugt 5 bis 100 nm und besonders bevorzugt 8 bis 50 nm aufweisen. Für den Fall das gefällte Kieselsäuren eingesetzt werden, werden diese zwecks Teilchenverkleinerung gemahlen.

Bevorzugte erfindungsgemäße Polymer-Dispersionen sind solche, in denen die SiO₂-Partikel der Siliciumdioxid-Dispersion b) als diskrete unvemetzte Primärpartikel vorliegen.

Es ist ebenfalls bevorzugt, dass die SiO₂-Partikel über Hydroxylgruppen an der Partikel-Oberfläche verfügen.

Besonders bevorzugt werden als wässrige Siliciumdioxid-Dispersionen b) wässrige Kieselsäuresole eingesetzt.

Eine wesentliche Eigenschaft der erfindungsgemäßen Kieselsäuren ist ihre verdickende Wirkung in Formulierungen aus Polychloropren-Dispersionen, die dazu führt, dass die so hergestellten Klebstoffe feinteilige, sedimentationsstabile Dispersionen bilden, sich gut verarbeiten lassen und auch auf porösen zu verklebenden Substraten eine hohe Standfestigkeit haben.

Zur Herstellung der erfindungsgemäßen Polymer-Dispersionen werden die Mengenverhältnisse der einzelnen Komponenten so gewählt, dass die resultierende Dispersion einen Gehalt an dispergierten Polymeren von 30 bis 60 Gew.-% aufweisen, wobei die Anteile der Polychloropren-Dispersion (a) von 60 bis 99 Gew.-% und der Siliciumdioxid-Dispersion (b) von 1 bis 40 Gew.-% betragen, wobei sich die Prozentangaben auf das Gewicht nichtflüchtiger Anteile beziehen und zu 100 Gew.-% addieren.

Bevorzugt enthalten die erfindungsgemäßen Polymer-Dispersionen einen Anteil von 70 Gew.-% bis 98 Gew.-% einer Polychloropren-Dispersion (a) und einen Anteil von 2 Gew.-% bis 30 Gew.-% einer Kieselsol-Dispersion (b), besonders bevorzugt sind die Mischungen aus 80 Gew.-% bis 93 Gew.-% an Dispersion (a) und 20 Gew.-% bis 7 Gew.-% an Dispersion (b), wobei sich die Prozentangaben auf das Gewicht nichtflüchtiger Anteile beziehen und zu 100 Gew.-% addieren.

Den Polychloropren Dispersionen können gegebenenfalls auch andere Dispersionen wie z.B. Polyacrylat-, Polyvinylidenchlorid-, Polybutadien-, Polyvinylacetat- oder Styrol-Butadien-Dispersionen in einem Anteil von bis zu 30 Gew.-% enthalten.

Die erfindungsgemäßen Polymer-Dispersionen enthalten gegebenenfalls weitere Klebstoffhilfs- und Zusatzmittel. Beispielsweise können Füllstoffe wie Quarzmehl, Quarzsand, Schwerspat, Calciumcarbonat, Kreide, Dolomit oder Talkum, gegebenenfalls zusammen mit Netzmitteln, beispielsweise Polyphosphaten, wie Natriumhexametaphosphat, Naphthalinsulfonsäure, Ammonium- oder Natriumpolyacryl-Säuresalze zugesetzt werden, wobei die Füllstoffe in Mengen von 10 bis 60 Gew.-%, bevorzugt von 20 bis 50 Gew.-%, und die Netzmittel in Mengen von 0,2 bis 0,6 Gew. -%, alle Angaben bezogen auf nichtflüchtige Anteile, zugesetzt werden.

Weitere geeignete Hilfsmittel sind beispielsweise in Mengen von 0,01 bis 1 Gew.-%, bezogen auf nichtflüchtige Anteile, einzusetzende organische Verdickungsmittel, wie Cellulosederivate, Alginate, Stärke, Stärkederivate, Polyurethan-Verdickungsmittel oder Polyacrylsäure oder in Mengen von 0,05 bis 5 Gew.-%, bezogen auf nichtflüchtige Anteile, einzusetzende anorganische Verdickungsmittel, wie beispielsweise Bentonite.

Zur Konservierung können der erfindungsgemäßen Klebstoffzusammensetzung auch Fungizide zugesetzt werden. Diese kommen in Mengen von 0,02 bis 1 Gew.-%, bezogen auf nichtflüchtige Anteile, zum Einsatz. Geeignete Fungizide sind beispielsweise Phenol- und Kresolderivate oder zinnorganische Verbindungen.

Gegebenenfalls können auch klebrigmachende Harze, wie z.B. unmodifizierte oder modifizierte Naturharze wie Kollophoniumester, Kohlenwasserstoffharze oder synthetische Harze wie Phthalatharze der erfindungsgemäßen Polymer-Dispersion in dispergierter Form zugesetzt werden (siehe z.B. in "Klebharze" R. Jordan, R. Hinterwaldner, S. 75-115, Hinterwaldner Verlag München 1994). Bevorzugt sind Alkylphenolharz- und Terpenphenolharz-Dispersionen mit Erweichungspunkten größer 70°C, besonders bevorzugt größer 110°C.

Ebenfalls möglich ist ein Einsatz organischer Lösungsmittel, wie beispielsweise Toluol, Xylol, Butylacetat, Methylethylketon, Ethylacetat, Dioxan oder deren Gemische oder Weichmacher, wie beispielsweise solche auf Adipat-, Phthalat- oder Phosphatbasis in Mengen von 0,5 bis 10 Gew.-Teile, bezogen auf nichtflüchtige Anteile.

Weiterer Gegenstand der Erfindung ist ein Verfahren zur Herstellung der erfindungsgemäßen Polymer-Dispersion, dadurch gekennzeichnet, dass die Polychloropren-Dispersion (a) mit der Siliciumdioxid-Dispersion (b) gemischt und gegebenenfalls die üblichen Klebstoffhilfs- und Zusatzmitteln zugegeben werden.

Ein bevorzugtes Verfahren zur Herstellung der erfindungsgemäßen Polymer-Dispersionen ist dadurch gekennzeichnet, dass zunächst die Polychloropren-Dispersion (a) mit den Klebstoffhilfs- und Zusatzmitteln vermischt und die Kieselsole (b) während oder nach der Vermischung zugegeben werden.

Bevorzugt wird als Zusatzmittel Zinkoxid oder Magnesiumoxid, als Akzeptor für geringe Mengen von Chlorwasserstoff, der von den Chloroprenpolymerisaten abgespalten werden kann, verwendet. Diese werden in Mengen von 0,1 bis 10 Gew.-%, bevorzugt von 1 bis 5 Gew.-%, bezogen auf die nichtflüchtigen Anteile, zugesetzt und können in Gegenwart der Polychloropren-Dispersionen (a) partiell hydrolisieren oder enthalten hydrolisierbare Anteile. Auf diese Weise kann die Viskosität der Polymer-Dispersion angehoben und auf ein gewünschtes Niveau eingestellt werden. Beschrieben wird diese Hydrolisierung für ZnO z.B. in "Gmelins Handbuch der anorganischen Chemie", 8. Auflage, 1924, Verlag Chemie Leipzig, Bd. 32, S. 134/135 und im Ergänzungsband 32, Verlag Chemie, 1956, S 1001-1003. Für MgO z.B. in "Gmelins Handbuch der anorganischen Chemie", 8. Auflage, 1939, Verlag Chemie Berlin, Bd. 27, S. 12/13, 47-50, 62-64.

Es können aber auch andere Stabilisatoren, wie z.B. Bleiglätte, oder Zusatzstoffe, die in Gegenwart alkalischer Polychloropren Dispersionen hydrolisieren, zugesetzt werden.

Wird eine höhere Viskosität der erfindungsgemäßen Polymer-Dispersionen nicht gewünscht, so können ZnO- oder MgO-Zusätze entfallen, ohne dass die Lagerstabilität des Produktes negativ beeinflusst wird.

Der Auftrag der Klebstoff-Formulierung kann auf bekannte Weisen, z.B. durch Streichen, Gießen, Rakeln, Spritzen, Walzen oder Tauchen durchgeführt werden. Die Trocknung des Klebstofffilms kann bei Raumtemperatur oder erhöhter Temperatur bis zu 220°C erfolgen.

Die erfindungsgemäßen Polymer-Dispersionen können als Klebstoffe verwendet werden, beispielsweise zum Verkleben beliebiger Substrate gleicher oder verschiedener Art, wie von Holz, Papier, Kunststoffen, Textilien, Leder, Gummi oder anorganischen Materialien, wie Keramik, Steingut, Glasfaser oder Zement.

### Beispiele

### A. Eingesetzte Substanzen

**Tabelle 1: Polychloroprendispersionen**

| **Dispersion** | **Polychloroprentyp** | **Produkt** |
|---|---|---|
| A | pH 12, stark kristallisierend, gelfrei, Feststoffgehalt 55 +/- 0,5 % | Dispercoll^{®} C 84, Bayer AG, DE |
| B | pH 12, mittelstark kristallisierend mittlerer Gelgehalt, Feststoffgehalt 58 +/- 0,5 % | Dispercoll^{®} C 74, Bayer AG, DE |
| C | pH 12, langsam kristallisierend, gelfrei Feststoffgehalt 58 +/- 0,5 % | Dispercoll^{®} C XP 2372H Bayer AG, DE |

**Tabelle 2: Siliciumdioxide**

| **Produkt** | **Lieferant** | **Lieferform** | **Typ** |
|---|---|---|---|
| Ae 200 | Degussa AG, | 20 % ige | Pyrogene Kieselsäure |
| Versuchsprodukt | Düsseldorf, DE | Dispersion | |
| Cab-o-sperse^{®} | Cabot GmbH, | 20 % ige | Pyrogene Kieselsäure |
| GP50 | Hanau, DE | Dispersion | |
| Cab-o-sperse^{®} | Cabot GmbH, | 20 % ige | Pyrogene Kieselsäure |
| GP53/30 | Hanau, DE | Dispersion | |
| Cab-o-sperse^{®} | Cabot GmbH, | 25 % ige | Pyrogene Kieselsäure |
| GP/52/25 | Hanau, DE | Dispersion | |
| Silicasil^{®} S | Bayer AG, Lev., DE | Feststoff | Synthetische |
| | | | Kieselsäure |
| Silicasil^{®}UV | Bayer AG, Lev., DE | Feststoff | Synthetische |
| | | | Kieselsäure |
| Silicasil^{®} MG | Bayer AG, Lev., DE | Feststoff | Synthetische |
| | | | Kieselsäure |
| Baysikal^{®}A | Bayer AG, Lev., DE | Feststoff | Na-Al-Silicat |
| Baysilkal^{®}KN | Bayer AG, Lev., DE | Feststoff | Ca-Silicat |
| Vulkasil^{®}C | Bayer AG, Lev., DE | Feststoff | Gefällte Kieselsäure |
| Levasil^{®}50 | H.C. Starck GmbH, Goslar, DE | Dispersion, 30 %ig | Kieselsol |
| Levasil^{®}100 | H.C. Starck GmbH, Goslar, DE | Dispersion, 30 %ig | Kieselsol |
| Levasil^{®}200 | H.C. Starck GmbH, Goslar, DE | Dispersion, 30 %ig | Kieselsol |
| Levasil^{®}300 | H.C. Starck GmbH, Goslar, DE | Dispersion, 30 %ig | Kieselsol |
| Wasserglas | Cognis GmbH, Düsseldorf, DE | Lösung | Natriumsilikat |

**Tabelle 3: Zusatz- und Hilfsstoffe**

| **Produkt** | **Feststoffgehalt** | **Funktion** | **Hersteller** |
|---|---|---|---|
| Rhenofit^{®}DDA-EM 50 | 50% | Alterungsschutzmittel | Bayer AG, DE |
| Bayoxide^{®}Z VP 9802 | 50% | Stabilisator | Borchers GmbH, DE |
| Dermulsene^{®} | 50% | Harz | Schenectady Europe S.A., FR |

### C. Meßmethoden

### 1. Bestimmung der Schälfestigkeit

Die Prüfung erfolgt gemäß EN 1392. Auf zwei Prüfkörper aus Nora-Gummi (Styrol-Butadien-Rubber, SBR) oder Weich-PVC (30% Dioctylphthalat, DOP) mit den Maßen 100 x 30 mm, gerauht mit Schleifpapier (Körnung = 80), wird ein 100 µm dicker Naßfilm der Dispersion aufgetragen und bei Raumtemperatur gelüftet.

Anschließend werden die Prüflinge nach:
Methode A : schockaktiviert und 10 Sekunden lang mit 4 bar zusammengefügt oder
Methode B : ohne Aktivierung 10 Sekunden lang mit 4 bar zusammengefügt.

Es erfolgt eine Reißprüfung auf einer handelsüblichen Zugprüfmaschine bei Raumtemperatur. Es werden die Festigkeitswerte sofort nach der Verklebung und nach einem Tag ermittelt.

### 1.1. Schockaktivierung

Die Klebeflächen werden 4 Sekunden mit einem IR-Strahler der Fa. Funk (Schockaktiviergerät 2000) bestrahlt. Dabei erwärmt sich der Klebefilm auf dem Nora-Gummi je nach Aktivierdauer auf 49°C, 65°C und 115°C. Eine 10 Sekunden-Aktivierung des Klebfilms auf der Weich-PVC-Probe ergibt eine Oberflächentemperatur von 92°C. Die Verklebung erfolgt sofort nach Wärmeaktivierung der mit Klebstoff beschichteten Prüfkörper, indem die aktivierten Klebeschichten gegeneinander gelegt und in einer Presse verpresst werden. Die so hergestellten Prüfkörper werden bei 23°C und 50 % relativer Feuchte gelagert.

### 2. Wärmeprüfung

Die Prüfkörper werden mit 4 kg belastet und in einem Heizschrank innerhalb von 30 min. auf 40°C temperiert. Anschließend werden die Prüfkörper mit einer linearen Heizrate von 0,5°C/min. auf 150°C aufgeheizt. Die Erweichungstemperatur, d.h. die Temperatur in °C bei der die Klebung unter der 4 kg Last versagt, wird registriert. Es werden jeweils 5 Einzelmessungen durchgeführt.

### 3. Messung der Kontaktklebzeit auf Polyester/Karton ("offene Zeit")

Es wird Polyesterfolie und weißer Karton vorgelegt und die Dispersionen mit einem Filmziehgerät bei einer Spaltöffnung des Rakels von 0,2 mm in einer Breite von 5 mm aufgetragen. Die mit der Klebstoff-Dispersion versehenen Polyesterstreifen werden in einem klimatisierten Raum bei 23°C und 50 % relativer Luftfeuchte gelagert. In Zeitabständen von 12 Stunden werden je zwei Kartonstreifen zueinander gekreuzt und 10 Sekunden mit einem 50 g Gewicht belastet Das Ende der Kontaktklebzeit ist dann überschritten, wenn im Trennversuch von Hand keine Kontaktierbarkeit der Folien oder der Kartonstreifen mehr vorhanden ist

| | |
|---|---|
| Polyesterfolie: | Hostaphan RN 75/0, Dicke: 0,075 mm. |
| Karton: | weißer, holzfreier Karton, 0,32 mm stark, Gewicht 250 g/m² |

### 4. Schälfestigkeit nach Verklebung im Heißpreßverfahren (Buchenholz/ Hart-PVC)

### 4.1. Herstellung der Prüfkörper

Die erfindungsgemäßen Klebstoffe werden auf eine gehobelte Buchenholzplatte (nach DIN 53-254, Abmessungen: 50 x 140 x 4 mm) unter Verwendung eines Pinsels aufgetragen. Der Klebstoffauftrag erfolgt nur auf eine Seite des Buchenholzprüfkörpers. Die Klebfläche beträgt 50 x 110 mm. Nach einer Trocknungszeit von 30 Minuten bei Umgebungstemperatur wird eine zweite Klebstoffschicht über die erste aufgetragen und anschließend 60 Minuten bei Umgebungstemperatur getrocknet. Nach der Trocknungszeit wird mit der nicht strukturierten Seite einer Hart-PVC-Kaschierfolie (Typ: Benelitfolie RTF, Abmessungen: 50 x 210 x 0,4) in einer Membranpresse 10 Sekunden bei 4 bar effektiver Druck und einer Fugentemperatur von 90°C gepreßt.

### 4.2. Bestimmung des Wärmestandes

Die gefügten Probekörper werden 3 Tage bei Raumtemperatur gelagert. Der Wärmestand wird in einem Universal Wärmeschrank mit automatischer Temperaturregelung bestimmt. Dazu wird das nicht verklebte Ende des Buchenholzprüfkörpers oben an einer Halterung mit einer Flügelschraube befestigt. Das überstehende Ende des PVC Prüfstreifens wird im 180° Winkel senkrecht nach unten mit einem 500 g Gewicht belastet. Die Starttemperatur beträgt 50°C. Jeweils nach 1 Stunde wird die Temperatur automatisch um 10°C erhöht, bis es zur vollständigen Ablösung (bzw. zum Abriss) des PVC-Streifens vom Holzprüfkörper kommt.

### 5. Bestimmung der Thermostabilität (HCl-Stabilität)

Die Prüfung der getrockneten Klebstoffproben erfolgt in Anlehnung an DIN 53381.

### Durchführung der Messung:

Die Proben (Dicke 0,1-1 mm) werden auf eine Kantenlänge von ca. 2-3 mm geschnitten und in ein 15 cm hohes Reagenzglas (Wanddicke ca. 0,4 cm, Durchmesser 1,8 cm) bis auf eine Höhe von 5 cm eingefüllt. Ein Korkstopfen wird mit einem Glasrohr (Länge 10 cm, Innendurchmesser 3 mm) versehen und in das Glasrohr ein Indikatorpapier (Kongorot-Papier, Länge 3 cm, Breite 1 cm) gesteckt. Das Indikatorpapier soll einen Abstand von 2,5 cm von der Probe aufweisen. Die als Doppelbestimmung durchgeführte Messung erfolgt bei 180°C im Ölbad. Die Messung ist beendet, wenn sich das Indikatorpapier von rot nach blau verfärbt.

### D. Herstellung der Klebstoffzusammensetzung

### Auf Basis von Polychloropren-Dispersionen

**Tabelle 4: Herstellung der Formulierung**

| **Produkt** | **Rezeptur (Angaben in Gew.-Teile)** | | | | | | | | | | | |
|---|---|---|---|---|---|---|---|---|---|---|---|---|
| | **1*** | **2** | **3** | **4** | **5*** | **6** | **7** | **8** | **9*** | **10** | **11** | **12*** |
| Polychloropren-Dispersion: | | | | | | | | | | | | |
| A | | | | | 100 | 100 | 100 | 100 | 100 | 100 | 70 | 70 |
| B | 100 | 100 | 100 | 100 | | | | | | | | |
| C | | | | | | | | | | | 30 | 30 |
| Siliciumdioxid-Typ (je nach Anwendung) | --- | 5 | 10 | 15 | --- | 5 | 10 | 15 | --- | 30 | 30 | --- |
| Rhenofit^{®} DDA-EM 50 | 2 | 2 | 2 | 2 | 2 | 2 | 2 | 2 | 2 | 2 | 2 | 2 |
| Bayoxide^{®} Z, VP 9802 | 4 | 4 | 4 | 4 | 4 | 4 | 4 | 4 | 4 | 4 | 4 | 4 |
| Dermulsene^{®} | 30 | | | | 30 | | | | 30 | | | 30 |

| | | | | | | | | | | | | |
|---|---|---|---|---|---|---|---|---|---|---|---|---|
| *) Vergleichsbeispiel | | | | | | | | | | | | |

Für die Herstellung der Formulierung wird die Polychloropren Dispersion in einem Becherglas vorgelegt. Unter Rühren werden der Stabilisator, das Alterungsschutzmittel, Zinkoxid (ZnO) und das Harz und das Siliciumdioxid zugegeben. In den nachfolgenden Beispielen wird der Typ des eingesetzten Siliciumdioxids angegeben.

### E. Ergebnisse

### 1. Bestimmung der Kontaktklebezeit

### 1.1 An Polyesterfolie

Siliciumdioxid-Typ: Levasil^{®} 300

**Tabelle 5: Bestimmung der Kontaktklebezeit**

| **Beispiel-Nr.** | **Rezeptur** | **Kontaktklebezeit (+ = klebt/ - = klebt nicht)** **Zeit in Minuten** | | | | | | |
|---|---|---|---|---|---|---|---|---|
| | | **5** | **15** | **30** | **45** | **60** | **120** | **180** |
| 1*) | 1 | + | + | - | - | - | - | - |
| 2 | 2 | + | + | + | + | + | - | - |
| 3 | 3 | + | + | + | + | + | - | - |
| 4 | 4 | + | + | + | + | - | - | - |
| 5*) | 5 | + | - | - | - | - | - | - |
| 6 | 6 | + | + | + | + | + | + | - |
| 7 | 7 | + | + | + | + | + | + | - |
| 8 | 8 | + | + | + | + | + | - | - |

| | | | | | | | | |
|---|---|---|---|---|---|---|---|---|
| *) Vergleichsbeispiel | | | | | | | | |

### 1.2 an Karton

Siliciumdioxid-Typ: Levasil^{®} 300

**Tabelle 6: Bestimmung der Kontaktklebezeit**

| **Beispiel-Nr.** | **Rezeptur** | **Kontaktklebezeit (+ = klebt/ - * klebt nicht)** **Zeit in Minuten** | | | | | | |
|---|---|---|---|---|---|---|---|---|
| | | **5** | **15** | **30** | **45** | **60** | **120** | **180** |
| 9*) | 1 | + | + | - | - | - | - | - |
| 10 | 2 | + | + | + | + | + | - | - |
| 11 | 3 | + | + | + | + | + | - | - |
| 12 | 4 | + | + | + | - | - | - | - |
| 13*) | 5 | + | - | - | - | - | - | - |
| 14 | 6 | + | + | + | + | + | - | - |
| 15 | 7 | + | + | + | + | + | + | - |
| 16 | 8 | + | + | + | + | - | - | - |

| | | | | | | | | |
|---|---|---|---|---|---|---|---|---|
| *) Vergleichsbeispiel | | | | | | | | |

Wie aus den beiden Tabellen 5 und 6 ersichtlich, bewirkt der Ersatz des Harzes in Rezeptur 1 und 5 durch das erfindungsgemäße Kieselsol in den Rezepturen 2 bis 4 sowie 6 bis 8 eine deutliche Verlängerung der Kontaktklebezeit.

### 2. Einstellung der Viskosität der Formulierungen durch partiell hydrolisierbare Zusatzstoffe

### 2.1 Zusatz ZnO

Rezeptur 10

**Tabelle 7: (Angabe der Bestandteile in Gew.-Teilen Dispersion)**

| Beispiel Nr. | SiO₂-Typ= Levasil^{®} 300 | ZnO | Viskosität (mPas) | | |
|---|---|---|---|---|---|
| | | | sofort | 30min | 60min |
| 17*) | 30 | 0 | 16,4 | 16,9 | 16,6 |
| 18 | 30 | 0,5 | 16,4 | 5800 | 18000 |
| 19 | 30 | 1,0 | 17,5 | 8800 | 20600 |
| 20 | 30 | 1,5 | 17,5 | 11200 | 22000 |
| 21 | 30 | 2,0 | 17,5 | 11800 | 22500 |
| 22 | 30 | 2,5 | 17,8 | 12400 | 23600 |
| 23 | 30 | 3,0 | 17,8 | 12600 | 24000 |
| 24 | 30 | 3,5 | 18,0 | 13400 | 25000 |
| 25 | 30 | 4,0 | 18,0 | 13600 | 25600 |

| | | | | | |
|---|---|---|---|---|---|
| *) Vergleichsbeispiel | | | | | |

### 2.2 Zusatz verschiedener Levasil^{®}-Typen

Rezeptur 10

Einsatz von Polychloropren-Dispersion A oder B

**Tabelle 8:**

| **Bsp.-Nr.** | **Dispersion** | **Levasil^{®}** | **Viskosistät nach Tagen (mPas)** | | | | | | | | | |
|---|---|---|---|---|---|---|---|---|---|---|---|---|
| | | | **0** | | **1** | | **2** | | **7** | | **9** | |
| 26 | B | 50 | 26 | | 141 | | 221 | | 406 | | 790 | |
| 27 | B | 100 | 21 | | 1060 | | 1450 | | 2620 | | 2920 | |
| 28 | B | 200 | 22 | | 10000 | | 11050 | | 11100 | | 12100 | |
| 29 | B | 300 | 18 | | 16000 | | 144000 | | 765000 | | - | |

| | | | **15** | | **20** | | **24** | | **33** | | | |
|---|---|---|---|---|---|---|---|---|---|---|---|---|
| 26 | B | 50 | 1170 | | 1120 | | 1000 | | 1050 | | | |
| 27 | B | 100 | 2900 | | 2880 | | 2880 | | 3000 | | | |
| 28 | B | 200 | 12050 | | 11800 | | 11700 | | 11900 | | | |
| 29 | B | 300 | 1700000 | | - | | 1760000 | | - | | | |

| | | | **Viskosität nach Tagen (mPas)** | | | | | | | | | |
|---|---|---|---|---|---|---|---|---|---|---|---|---|
| | | | **0** | **1** | | **4** | | **6** | | **11** | | **14** |
| 30 | A | 50 | 34 | 323 | | 520 | | 540 | | 580 | | 630 |
| 31 | A | 100 | 120 | 3730 | | 5200 | | 6300 | | 7300 | | 7400 |

| | | | **Viskosität nach Stunden (mPas)** | | | | | | | | | |
|---|---|---|---|---|---|---|---|---|---|---|---|---|
| | | | **0** | | **1** | | **2** | | **3** | | **4** | |
| 32 | A | 200 | 246 | | 9950 | | 35250 | | 40000 | | 79400 | |
| 33 | A | 300 | 600 | | 16400 | | 126000 | | - | | - | |

| | | | **5** | | **7** | | **14** | | **22** | | | |
|---|---|---|---|---|---|---|---|---|---|---|---|---|
| 32 | A | 200 | 84000 | | 88300 | | 520000 | | 576000 | | | |
| 33 | A | 300 | - | | - | | - | | - | | | |

Aus den Tabellen 7 und 8 wird ersichtlich, wie sich durch die Wahl des Kieselsoltyps und der Konzentration an teilhydrolisierbaren Zinkoxid die Formulierungen, ohne Zusatz von zusätzlichen Verdickern, in ihrer Viskosität anheben und im Viskositätsniveau einstellen lässt.

### 3. Schälfestigkeit

### 3.1 Bestimmung der Anfangsfestigkeit an Nora/Nora Verklebungen

SiO₂-Typ: Levasil^{®}300

**Fügeart A (Fügen nach Schockaktivierung):**

**Tabelle 9: t = Offene Zeit vor dem Fügen**

| **t (min)** | **Sofort Schälfestigkeit Rezeptur 9 (N/mm)** | **Sofort Schälfestigkeit Rezeptur 10 (N/mm)** |
|---|---|---|
| 20 | 1,6 | 2,7 |
| 25 | 2,1 | 2,8 |
| 30 | 2,1 | 2,9 |
| 35 | 2,2 | 2,8 |
| 40 | 2,3 | 2,8 |
| 45 | 2,4 | 3,0 |
| 50 | 2,6 | 3,4 |
| 55 | 2,6 | 3,6 |
| 60 | 2,7 | 4,0 |

### Fügeart B (Fügen ohne Schockaktivierung)

**Tabelle 10: t = Offene Zeit vor dem Fügen**

| **t (min)** | **Sofort Schälfestigkeit Rezeptur 9 (N/mm)** | **Sofort Schälfestigkeit Rezeptur 10 (N/mm)** |
|---|---|---|
| 20 | 1,3 | 2,0 |
| 25 | 1,9 | 3,1 |
| 30 | 2,2 | 3,1 |
| 35 | 2,3 | 3,2 |
| 40 | 2,5 | 3,4 |
| 45 | 2,4 | 3,6 |
| 50 | 2,6 | 3,5 |
| 55 | 2,6 | 3,6 |
| 60 | 2,4 | 3,5 |

Die Tabellen 9 und 10 zeigen, dass sich durch Einsatz von erfindungsgemäßen Polymer-Dispersionen Klebstoffe mit langer offenen Zeit und hoher Anfangsfestigkeit herstellen lassen (Rezeptur 10). Dieser Effekt wird auch ohne vorherige Thermoaktivierung des Klebstoff-Films erreicht (Fügeart B).

### 3.2 Bestimmung der Nassfestigkeit

### Beispiel : Leder / Leder Verklebungen

SiO₂-Typ: Levasil^{®}300

**Tabelle 11: t = Offene Zeit vor dem Fügen**

| **t (min)** | **Sofort Schälfestigkeit Rezeptur 12 (N/mm)** | **Sofort Schälfestigkeit Rezeptur 11 (N/mm)** |
|---|---|---|
| 0,5 | 0 | 0,6 |
| 1 | 0 | 0,9 |
| 1,5 | 0 | 1,2 |
| 2 | 0 | 1,2 |
| 2,5 | 0 | 1,3 |
| 3 | 0 | 1,3 |
| 4 | 0 | 1,4 |
| 5 | 0 | 1,6 |
| 6 | 0 | 1,4 |
| 7 | 0,1 | 1,4 |
| 8 | 0,3 | 1,3 |
| 9 | 0,6 | 1,3 |
| 10 | 0,6 | 1,3 |

Die Tabelle in 11 zeigt am Beispiel der Verklebung von Leder, wie sich durch Zusatz von Kieselsol die Nassfestigkeit der Klebstoffformulierung (Rezeptur 11) gegenüber dem Stand der Technik (Rezeptur 12) deutlich anheben lässt.

### 3.3 Messung der Schälfestigkeit an Nora / Nora Prüfkörpern

### Bedingungen

offene Zeit vor dem Fügen = 60 min.

Fügeart : A

**Tabelle 12:**

| **Dispersion** | **Rezeptur** | **Levasil^{®}300** | **Schälfestigkeit (N/mm)** | |
|---|---|---|---|---|
| | | | **sofort** | **9 Tage** |
| A | 9 | - | 2,2 | 4,0 |
| A | 10 | + | 4,0 | 8,3 |

### 4. Ermittlung des Wärmestandes an Nora Prüfkörpern

**Tabelle 13:**

| **Dispersion** | **Rezeptur** | **Levasil-Typ** | **Wärmestand (°C)** |
|---|---|---|---|
| B | 9 | - | 64,5 |
| B | 10 | 50 | 125 |
| B | 10 | 100 | 128 |
| B | 10 | 300 | 147 |

Wie in den Tabellen 12 und 13 ersichtlich, werden durch den Zusatz von Kieselsol die Festigkeit der Verklebungen und die Wärmebeständigkeit der Verklebungen gegenüber dem Stand der Technik (Rezeptur 9) deutlich angehoben.

### 5. Messung von Schälfestigkeit und Wärmestand von Holz / PVC

### Bedingung:

Aktiviertemperatur 110°C

**Tabelle 14:**

| **Polychloroprendisp.** | **Rezeptur** | **Levasil^{®} 50** | **Schälfestigkeit (N/mm)** | | **Wärmestand °C** |
|---|---|---|---|---|---|
| | | | **sofort** | **9 Tage** | |
| A | 9 | - | 1,8 | 4,0 | 80 |
| A | 10 | + | 3,0 | - 6,3 | 120 |

Analog den Ergebnissen in Tabellen 12 und 13 (Verklebung von SBR Kautschuk) werden auch bei der Verklebung anderer Substrate wie Holz / PVC die positiven Effekte von Kieselsol in Rezeptur 10 sichtbar.

### 6. Vergleich des Eigenschaftsbildes verschiedener Siliciumdioxyde in Klebstoff Formulierungen auf der Basis von Polychloropren Dispersionen

Bedingungen:
Rezeptur 10
Nora Testmaterial,
15 min offene Zeit,
Fügemethode B (ohne Schockaktivierung)

In Rezeptur 10 wurde das Gewicht nichtflüchtiger Anteile der verschiedenen Siliciumdioxid-Typen so gewählt, dass es dem Gewicht nichtflüchtiger Anteile bei Einsatz von 30 Gew.-Teilen Levasil^{®} entspricht.

**Tabelle 15:**

| **Produkt** | **Lieferform** | **Typ** | **Schälfestigkeit (N/mm)** | | **Verdickerwirkung*)** |
|---|---|---|---|---|---|
| | | | **sofort** | **6 Tage** | |
| Ae 200 | Dispersion | Pyrogene Kiesels. | 0,8 | 2,1 | + |
| Cab-o-sperse^{®} GP50 | Dispersion | Pyrogene Kiesels. | 3,3 | 3,9 | + |
| Cab-o-sperse^{®} GP53/30 | Dispersion | Pyrogene Kiesels. | 2,7 | 2,2 | + |
| Cab-o-sperse^{®} GP/52/25 | Dispersion | Pyrogene Kiesels. | 2,9 | 3,5 | + |
| Silicasil^{®}S | Feststoff | Synth. Kiesels. | - | - | Koag. |
| Silicasil^{®}UV | Feststoff | Synth. Kiesels. | - | - | Koag. |
| Silicasil^{®}MG | Feststoff | Synth. Kiesels. | - | - | Koag. |
| Baysikal^{®}A | Feststoff | Na-Al-Silicat | 3,2 | 4,0 | Sedimentation |
| Baysilkal^{®}KN | Feststoff | Ca-Silicat | 4,1 | 5,9 | Koag. |
| Vulkasil^{®}C | Feststoff | Gefällte Kiesels. | 2,2 | 3,8 | - |
| Levasil^{®}50 | Dispersion | Kieselsol | 4,2 | 5,2 | ++ |
| Levasil^{®}100 | Dispersion | Kieselsol | 2,5 | 3,6 | +++ |
| Levasil^{®}200 | Dispersion | Kieselsol | 4,8 | 5,6 | ++++ |
| Levasil^{®}300 | Dispersion | Kieselsol | 3,9 | 0,7 | +++++ |
| Wasserglas | Lösung | Natriumsilikat | 5,2 | 2,0 | - |

| | | | | | |
|---|---|---|---|---|---|
| *) Verdickende Wirkung: - keine, + = gering, ++ = gut, +++ sehr gut, ++++ = ausgezeichnet | | | | | |

Ein Vergleich der Wirksamkeit von unterschiedlichen Silikat Dispersionstypen zeigt, daß verschiedene Produkte mit Polychloropren-Dispersionen keine stabilen Dispersionen bilden, und koagulieren, bzw. nach kurzer Lagerzeit Sedimentieren. Dies betrifft die Synthetischen Kieselsäuren und Na-Al-Silicate. Gefällte Kieselsäuren und Natriumsilikat führen zwar zu stabilen Dispersionen, wirken aber nicht verdickend. Pyrogene Kieselsäuren zeichnen sich durch eine leichte verdickende Wirkung aus, zeigen aber bei der Kaltverklebung keine gute Schälfestigkeit. Kieselsole dagegen wirken in der Klebstoff Formulierung verdickend und erhöhen die Festigkeit der Verklebung.

### 7. Einfluß von Kieselsol auf die HCl-Stabilität von Polychloropren Klebstoff Formulierungen

**Tabelle 16:**

| **Rezeptur (ohne ZnO)** | **Levasil^{®}Typ** | **HCl-Stabilität (min)** |
|---|---|---|
| 9 | - | 75 |
| 10 | 50 | 100 |
| 10 | 100 | 130 |
| 10 | 200 | 180 |
| 10 | 300 | 240 |

Der Zusatz von Kieselsol bewirkt eine zusätzliche thermische Stabilisierung der Verklebung.

## Patentansprüche

1. Wässrige Polymer-Dispersion enthaltend
a) eine Polychloropren-Dispersion mit einer mittleren Teilchengröße von 60 bis 220 nm sowie
b) eine wässrige Siliciumdioxid-Dispersion mit einem Partikeldurchmesser der SiO₂-Partikel von 1 bis 400 nm.

2. Wässrige Polymer-Dispersion gemäß Anspruch 1, **dadurch gekennzeichnet, dass** die SiO₂-Partikel einen Partikeldurchmessser von 50 bis 100 nm beträgt.

3. Wässrige Polymer-Dispersion gemäß Anspruch 1, **dadurch gekennzeichnet, dass** die SiO₂-Partikel einen Partikeldurchmessser von 8 bis 50 nm beträgt.

4. Wässrige Polymer-Dispersion gemäß einem oder mehreren der Ansprüche 1 bis 3, **dadurch gekennzeichnet, dass** die SiO₂-Partikel als diskrete unvemetzte Primärpartikel vorliegen.

5. Wässrige Polymer-Dispersion gemäß einem oder mehreren der Ansprüche 1 bis 4, **dadurch gekennzeichnet, dass** die SiO₂-Partikel über Hydroxylgruppen an der Partikel-Oberfläche verfügen.

6. Wässrige Polymer-Dispersion gemäß einem oder mehreren der Ansprüche 1 bis 5, **dadurch gekennzeichnet, dass** die wässrige Siliciumdioxid-Dispersion b) eine wässrige Kieselsäuresole ist.

7. Verfahren zur Herstellung der Polymer-Dispersion gemäß Anspruch 1, **dadurch gekennzeichnet, dass** die Polychloropren-Dispersion (a) mit der Siliciumdioxid-Dispersion (b) gemischt und gegebenenfalls die üblichen Klebstoffhilfs- und Zusatzmitteln zugegeben werden.

8. Verfahren gemäß Anspruch 7, **dadurch gekennzeichnet, dass** als Zusatzmittel Zinkoxid oder Magnesiumoxid eingesetzt wird.

9. Verwendung der Polymer-Dispersion gemäß Anspruch 1 als Klebstoff.

## Claims

1. Aqueous polymer dispersion comprising
a) a polychloroprene dispersion having an average particle size of from 60 to 220 nm and also
b) an aqueous silicon dioxide dispersion having an SiO₂ particle diameter of from 1 to 400 nm.

2. Aqueous polymer dispersion according to Claim 1, **characterized in that** the SiO₂ particles amounts to a particle diameter of from 50 to 100 nm.

3. Aqueous polymer dispersion according to Claim 1, **characterized in that** the SiO₂ particles amounts to a particle diameter of from 8 to 50 nm.

4. Aqueous polymer dispersion according to one or more of Claims 1 to 3, **characterized in that** the SiO₂ particles are in the form of discrete, non-crosslinked primary particles.

5. Aqueous polymer dispersion according to one or more of Claims 1 to 4, **characterized in that** the SiO₂ particles possess hydroxyl groups on the particle surface.

6. Aqueous polymer dispersion according to one or more of Claims 1 to 5, **characterized in that** the aqueous silicon dioxide dispersion b) is an aqueous silica brine.

7. Process for preparing the polymer dispersion according to Claim 1, **characterized in that** the polychloroprene dispersion (a) is mixed with the silicon dioxide dispersion (b) and, where appropriate, the customary adhesives auxiliaries and additives are added.

8. Process according to Claim 7, **characterized in that** zinc oxide or magnesium oxide is used as additive.

9. Use of the polymer dispersion according to Claim 1 as adhesive.

## Revendications

1. Dispersion aqueuse de polymère, contenant
a) une dispersion de polychloroprène, présentant une grosseur moyenne des particules de 60 à 220 nm ainsi que
b) une dispersion aqueuse de dioxyde de silicium présentant un diamètre des particules de SiO₂ de 1 à 400 nm.

2. Dispersion aqueuse de polymère selon la revendication 1, **caractérisée en ce que** les particules de SiO₂ présentent un diamètre de particule de 50 à 100 nm.

3. Dispersion aqueuse de polymère selon la revendication 1, **caractérisée en ce que** les particules de SiO₂ présentent un diamètre de particule de 8 à 50 nm.

4. Dispersion aqueuse de polymère selon l'une ou plusieurs des revendications 1 à 3, **caractérisée en ce que** les particules de SiO₂ se trouvent sous forme de particules primaires discrètes, non réticulées.

5. Dispersion aqueuse de polymère selon l'une ou plusieurs des revendications 1 à 4, **caractérisée en ce que** les particules de SiO₂ disposent de groupes hydroxyle à la surface des particules.

6. Dispersion aqueuse de polymère selon l'une ou plusieurs des revendications 1 à 5, **caractérisée en ce que** la dispersion aqueuse de dioxyde de silicium b) est un sol aqueux de silice.

7. Procédé pour la préparation de la dispersion de polymère selon la revendication 1, **caractérisé en ce que** la dispersion de polychloroprène (a) est mélangée avec la dispersion de dioxyde de silicium (b) et les adjuvants et additifs d'adhésifs usuels sont le cas échéant ajoutés.

8. Procédé selon la revendication 7, **caractérisé en ce qu'**on utilise, comme additif, de l'oxyde de zinc ou de l'oxyde de magnésium.

9. Utilisation de la dispersion de polymère selon la revendication 1 comme adhésif.
